# EUROPEAN PATENT SPECIFICATION

(11) **EP 3 922 970 B1**
(45) Date of publication and mention of the grant of the patent: **07.08.2024**
(21) Application number: 21178646.2
(22) Date of filing: 09.06.2021
(51) Int. Cl.: G01K 1/08, G01K 1/143, G01K 13/00

(54) **TEMPERATURE DETECTOR FOR INDUCTION HEATING SYSTEM**
TEMPERATURDETEKTOR FÜR INDUKTIONSHEIZSYSTEM
DÉTECTEUR DE TEMPÉRATURE POUR SYSTÈME DE CHAUFFAGE PAR INDUCTION

(30) Priority: 09.06.2020 US 202063036727 P
(43) Date of publication of application: 15.12.2021
(73) Proprietor: Cooktek Induction Systems, LLC, Carrollton, Texas 75007 (US)
(72) Inventor: YODER, Steven L., Coppell (US); DAVIS, Gabrielle, Denton (US); SHAN, Mingwei, Frisco (US)
(74) Representative: Leach, Sean Adam

(56) References cited:
- US-A1- 2017 142 780

## Description

### BACKGROUND

The subject disclosure relates to induction heaters that are configured to receive pans of food products or liquids to be heated within the pan. Induction heaters often include temperature detectors that measure the temperature of a pan that is disposed within the induction heater with the measured temperature used to control the operation of the induction coil via feedback control. Often the temperature detectors deform permanently or elastically with use which decreases the life of the temperature detector. Temperature detectors also frequently receive spillage from the contents that are disposed within the pan (liquid or solids) that degrade the surfaces of the temperature detector, which often requires replacement or maintenance or recalibration of the temperature detector. The subject disclosure is directed to a temperature detector that is configured to maintain good contact with a pan disposed thereon for accurate temperature detection and therefore efficient operation. The disclosed temperature detector is also designed to withstand spillage for long operation between required maintenance or replacement.
US2017/142780 describes an induction cooker which has a temperature sensor mount that includes a reciprocity sensor holder and a flexible diaphragm.

### BRIEF SUMMARY

An aspect of the invention provides a system as set out in claim 1.

Another representative embodiment of the disclosure is provided. The embodiment includes a temperature detector. The temperature detector includes an RTD and associated wiring, a first housing that receives the RTD, and a grommet disposed around the first housing. The temperature detector further comprises a cylindrical second housing that supports and receives a portion of the first housing therewith and through a first end of the second housing. The grommet includes an arcuate portion that is biased in a direction upwardly from the resting surface, the arcuate portion comprises a central opening through which the first housing extends, wherein the central opening defines a inner circular surface that is disposed between the first and second housings.

In an aspect there is provided a system to warm contents in a pan, comprising: an induction heating system comprises an induction coil, a resting surface, and a temperature detector disposed upon the resting surface such that a pan that is disposed upon the resting surface contacts the temperature detector; the temperature detector comprises an RTD and associated wiring, a first housing that receives the RTD, and a grommet disposed around the first housing, the temperature detector further comprises a cylindrical second housing that supports and receives a portion of the first housing therewith and through a first end of the second housing, wherein the grommet includes an arcuate portion that is biased in a direction upwardly from the resting surface, the arcuate portion comprises a central opening through which the first housing extends, wherein the central opening defines an inner circular surface that is disposed between the first and second housings.

The system may further comprise an end cap that extends into the second housing through a second end of the second housing, wherein the end cap contacts the inner surface of the second housing.
The inner surface of the second housing may be threaded along at least a portion of its length, and wherein the first housing and the second make a threaded connection, and wherein the end cap makes a threaded connection with the second housing.

The associated wiring of the RTD may extend through the first housing, the central opening in the grommet, and the second housing. The grommet may further comprise a ledge and a cantilevered portion, wherein the arcuate portion extends from the cantilevered portion, the arcuate portion defines the central opening.

The portion of the resting surface may be disposed between the cantilevered portion and the ledge. The grommet may be circular and the ledge, cantilevered portion, and the arcuate portion may each extend around the circumference of the grommet.

The system may further comprise a support disk that is disposed below the ledge, the support disk includes a center portion with an aperture though which the second housing extends, the center portion an inverse conical portion with a side wall that extends downwardly toward the aperture, wherein the inverse conical portion is disposed below the arcuate portion of the grommet.

The arcuate portion of the grommet may be urged downwardly when a pan is positioned upon the first housing, and wherein the first housing and the second housing are also urged downwardly.

The arcuate portion of the grommet may contact the center portion of the support disk when urged downwardly when the pan is positioned upon the first housing. The second housing and first housing may be urged upwardly by a spring disposed below the second housing and wherein the first and second housings are urged downwardly against the upward urging force of the spring when a pan is disposed upon the first housing.

The first housing may be aluminum. The grommet may be an elastomeric material.

The resting surface may be circular and may include a center aperture through which the temperature detector extends, further comprising a side wall that contacts an outer circumferential sidewall of the resting surface and extends above a top surface of the resting surface.

The temperature detector may comprise a plurality of temperature detectors, wherein the resting surface is rectangular and includes a plurality of spaced apertures through each of the plurality of temperature detectors extend, further comprising a side wall that contacts and outer surface of the resting surface and extends above a top surface of the resting surface.

An aspect provides a temperature detector, comprising: an RTD and associated wiring, a first housing that receives the RTD, and a grommet disposed around the first housing, the temperature detector further comprises a cylindrical second housing that supports and receives a portion of the first housing therewith and through a first end of the second housing, wherein the grommet includes an arcuate portion that is biased in a direction upwardly from the resting surface, the arcuate portion comprises a central opening through which the first housing extends, wherein the central opening defines a inner circular surface that is disposed between the first and second housings.

The system may further comprise an end cap that extends into the second housing through a second end of the second housing, wherein the end cap contacts the inner surface of the second housing.

The inner surface of the second housing may be threaded along at least a portion of its length, and wherein the first housing and the second make a threaded connection, and wherein the end cap makes a threaded connection with the second housing.

The associated wiring from the RTD may extend through the first housing, the central opening in the grommet, and the second housing. The grommet may comprise a ledge, a cantilevered portion, and an arcuate portion, wherein the arcuate portion extends from the cantilevered portion, the arcuate portion defines the central opening.

The grommet may be circular and the ledge, cantilevered portion, and the arcuate portion each extend around the circumference of the circular grommet.

The system may further comprise a support disk, that is disposed below the ledge, the support disk includes a center portion with an aperture though which the second housing extends, the center portion an inverse conical portion with a side wall that extends downwardly toward the aperture, wherein the inverse conical portion is disposed below the arcuate portion of the grommet.

The first housing may be aluminum. The grommet may be an elastomeric material. The arcuate portion of the grommet may be urged downwardly when a pan is positioned upon the first housing, and wherein the first housing and the second housing are also urged downwardly.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF THE DRAWINGS

FIG. 1 is a perspective view of an induction heater that includes a temperature detector, wherein the induction heater has a round profile.
FIG. 1a is a perspective view of another induction heater that has a plurality of temperature detectors, wherein the induction heater has a rectangular profile.
FIG. 2 is a top view of the induction heater of FIG. 1.
FIG. 3 is a top perspective view of the resting surface and temperature detector of the induction heater of FIG. 1.
FIG. 4 is a bottom perspective view of the resting surface and temperature detector of the induction heater of FIG. 1.
FIG 5. is a perspective cross-sectional view of the induction heater of FIG. 1.
FIG. 6 is a side cross-sectional view of the induction heater of FIG. 1 with a pan approaching the resting surface and temperature detector.
FIG. 6a is a detail view of detail A of FIG. 6.
FIG. 7 is the view of FIG. 6 with the pan resting upon the temperature detector.
FIG. 7a is a detail view of detail B of FIG. 7.
FIG. 8 is a top perspective view of the support disk of the temperature detector of the heaters of FIGs. 1 and 1a.
FIG. 8a is a bottom perspective view of the support disk of FIG. 8.
FIG. 9 is a side cross-sectional view of the induction heater of FIG. 1a, which includes a plurality of temperature detectors of the induction heater of FIG. 1.

### DETAILED DESCRIPTION OF THE PREFERRED EMBODIMENTS

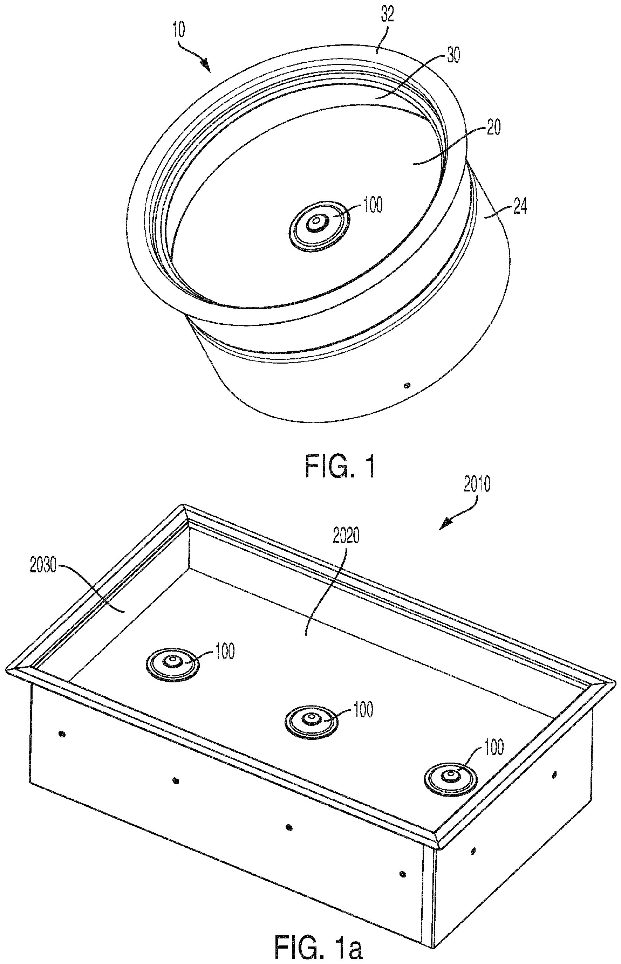

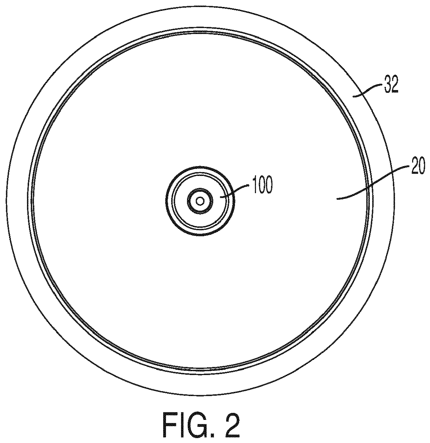

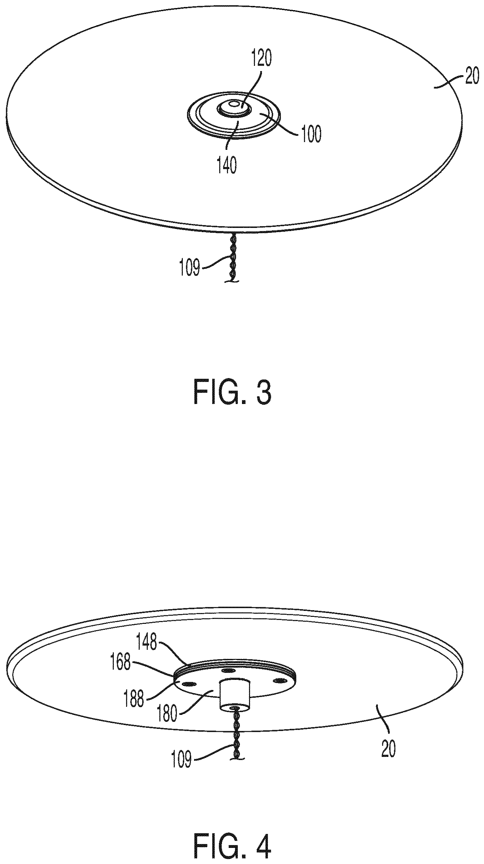

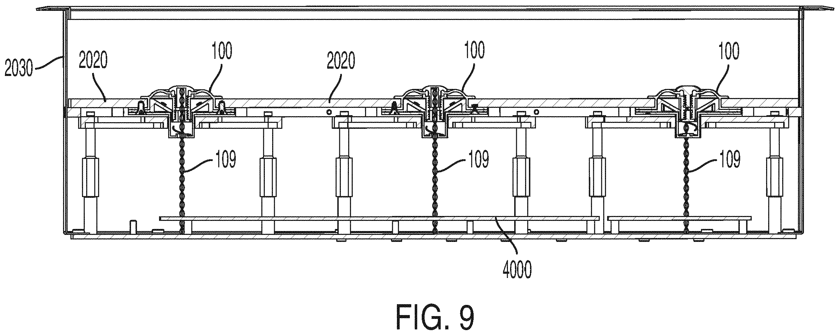

Turning now to FIGs. 1-9, an induction heating device 10 is provided. The induction heating device includes a housing 24, a side wall 30, a resting surface 20, an induction coil 3000, and a temperature detector 100 that is disposed upon the resting surface 20 and positioned such that the temperature detector 100 is contacted by a bottom surface 1020 of a pan 1010 when the pan is positioned within the heating device. This specification depicts two different shaped heating devices, a circular device (FIG. 1) that includes a single temperature detector 100 disposed at the center of the resting surface 20, and a rectangular device 2010 (FIG. 1a) that includes three temperature detectors 100 that are disposed at different positions upon the resting surface 2020, such as along a center line and consistently spaced from each other. As one of ordinary skill in the art will readily comprehend with reference to this disclosure and figures, induction heating devices with different shapes, sizes, and number of temperature detectors 100 can be provided.

While this disclosure is drafted to specifically describe devices 10 that are configured to hold cooked or heated food (or to heat food), this device may also be appropriate or modified to hold other non-food liquids or solids, such as chemicals, epoxies or glues that need to be maintained at a temperature above room temperature for a period of time.

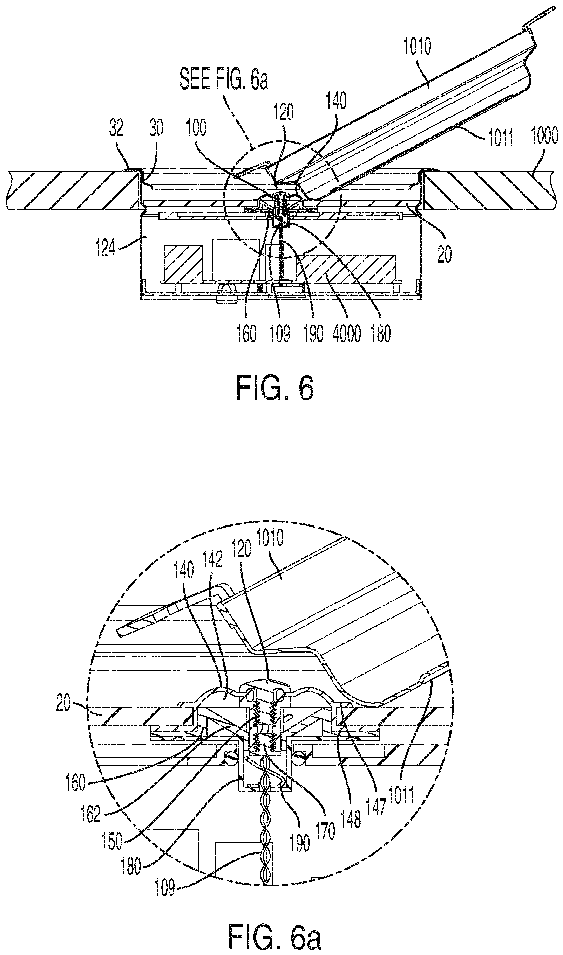

In some embodiments, the induction heating device 10 may be disposed within an aperture in a counter 1000 (FIG. 6) in a restaurant, banquet facility, or kitchen, other location where food is to be maintained heated for serving or cooking. In other embodiments, the induction heating device 10 may be disposed within in a housing.

In some embodiments, the induction coil 3000 may be disposed below the resting surface 20 and in some embodiments the induction coil 3000 may also be disposed within the side wall 30 of the device 10 so that the magnetic fields generated by the induction coils 3000 are directed simultaneously to different portions of the pan 1010 for faster heating of the pan 1010 (and therefore the contents of the pan) and also for more uniform heating of the contents of the pan. The induction coil 3000 is operated to create a magnetic field that induces an eddy current in the pan 1010 when disposed thereon, as is known in the art.

The temperature detector 100 may include a RTD 129 (resistance temperature detector) or it may be another form of temperature detector known in the art, which is configured to measure temperature and provide a signal to a controller 4000 for feedback control purposes regarding operation of the induction coil 3000. While RTDs are specifically discussed herein for the sake of brevity, the use of the term "RTD" when describing its use within the temperature detector applies to other temperature detection devices that are known in the art. The induction heating device 10 may include an input and display where the user can monitor the temperature of the device as well as input a desired temperature for the device. The input and display may communicate with the controller 400 and also include timers, information regarding the contents of the pan within the device. The input and display may be provided with the device, and also may communicate with a remote input display upon an app on a phone or tablet, a computer, and the like via a cellular signal, Wi-Fi, Bluetooth or via other known communication manners, which may operate via conventional or proprietary internet of things protocols. The controller 4000 may additionally or alternatively communicate with a POS system and/or a restaurant network, automated recipe system, inventory system, or other databases or systems found within restaurant or other facility.

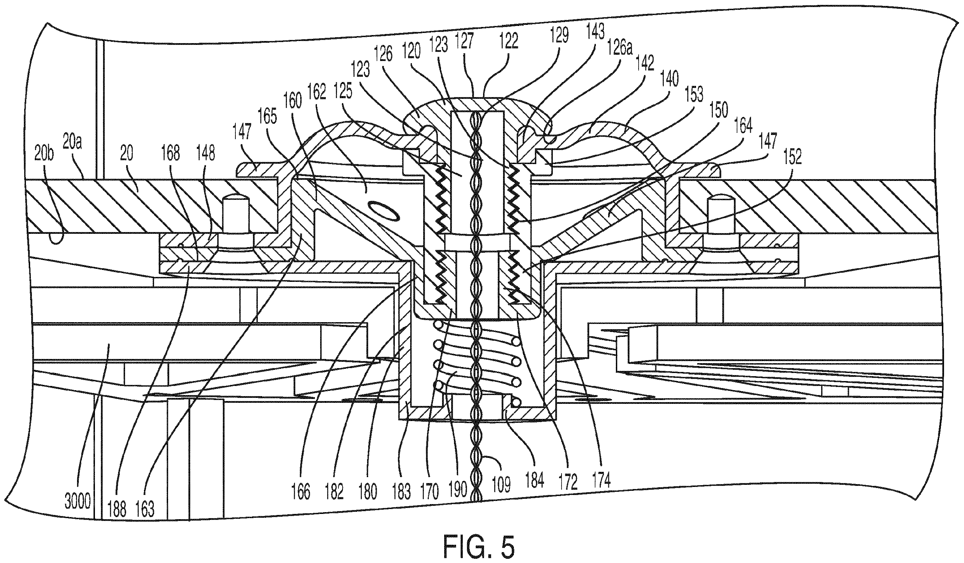

The temperature detector 100 may include a support 180 that supports a plurality of components thereon. In some embodiments, the support 180 may be fixed to the resting surface 20, such as with a plurality of fasteners. The support 180 may be disposed below the resting surface 20, i.e. below the bottom surface 20b of the resting surface, which is opposite from the upper surface 20a that the pan rests upon. The support 180 includes a central pocket 182 and an outer resting surface 188. The central pocket 182 receives the second housing 150 and a portion of the central portion 162 of the support disk 150 (FIG. 5). The central pocket 182 includes a cylindrical portion 183 and a bottom wall 184. The bottom wall 184 has an aperture through which the wire 109 of the RTD (discussed below) extends. The bottom wall 184 may also receive a spring 190 thereupon that extends between the end cap 170 (when provided, otherwise the second housing 150) and applies an upward biasing force upon the second housing 150 (when provided through the end cap 170) that is transferred to the first housing 120 and the grommet 140 to urge the first housing 120 and grommet 140 upwardly with respect to the resting surface 20 and the support disk 160, so that the temperature detector normally extends above the support disk 160 as depicted in FIGs. 6 and 6a.

The outer resting surface 188 of the support 180 is a flat surface that extends outwardly from the central pocket 182. The outer resting surface extends parallel and below the resting surface 20 and may be fixed to the resting surface 20 with a plurality of fasteners that extend through a one or preferably multiple apertures in the outer resting surface 188 (and also extend through aligned holes in the outer support portion 168 of the support disk 160 and the ledge 148 of the grommet 140 (each discussed below)).

The temperature detector 100 further includes a first housing 120, a grommet 140 and a second housing 150. In some embodiments, the temperature detector 100 further includes an end cap 170 that is connectable to the second housing 160, as discussed below. The temperature detector may further include a support disk 160.

The first housing 120 is best understood with reference to FIGs. 5, 6a, 7a, and 8. The first housing 120 receives and supports the RTD 129. In some embodiments, the first housing 120 includes a top surface 122 that with a central portion 127 that faces upward and includes a ledge portion 126 that extends outwardly from a body portion 124. The ledge portion 126 may be curved downwardly from the central portion and may have an outer circumferential portion 126b that extends in a downward direction.

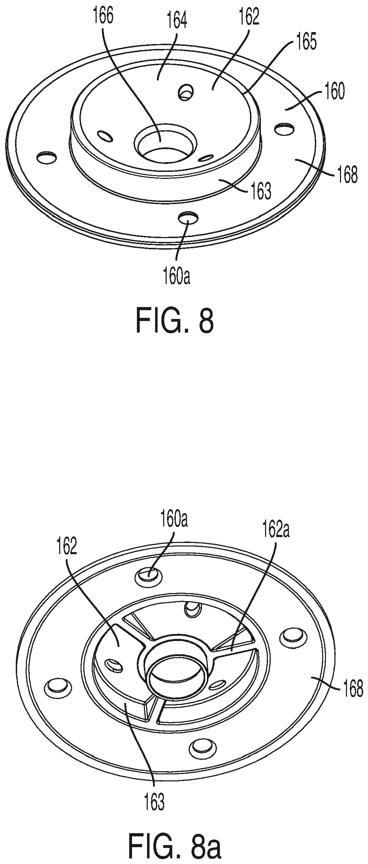

The first housing 120 may be established wherein the top to bottom cross-section of the first housing (i.e. a cross-section that extends through the longitudinal axis 2 of the first housing 120 (FIG. 8)) is the same around the entire circumference of the first housing, other than the threads 124a that extend along the body portion 124 and from the outer surface of the body portion 124 in embodiments that include threads 124a. The RTD 129 may be disposed within a cavity 125 formed within the body portion and below the top surface and fixed in contact with an inner surface of the top surface 122, such that the RTD 129 receives conduction heat transfer that extends through the top surface 122.

The RTD 129 may include a wire 109 that extends through a cavity 125 that extend within the body portion 124 and out the bottom surface of the first housing 120. The wire 109 may extend through the cavities through the second housing 150 and the cavity and hole in the end cap 170. The wire 109 may further extend through a hole in the support 180 and ultimately be connected to a controller 4000. In other embodiments, the RTD 129 may communicate with the controller 4000 wirelessly, such as via Wi-Fi, Bluetooth or via other known means of wireless communication.

The controller 4000 receives a signal from the RTD 129 and uses feedback control to control the operation of the induction coils to control the temperature of the pan and ultimately the food within the pan as is well known in the art.

In some embodiments, the cavity 125 may be filled with a material, such as an epoxy or other material to prevent foreign material from entering the cavity 125 and interfering with the operation of the RTD. The material that fills the cavity 125 may have a relatively low thermal conductivity (such as a thermal conductivity that is much lower than the thermal conductivity of the material, such as aluminum, that forms the top surface 122 of the first housing 120) such that environmental heat, such as heat from the induction coils does not substantially communicate with the RTD during operation such that the output of the RTD is closely related to the heat flowing through the top surface 122 to the RTD 129 from the pan and not from other heat sources.

The first housing 120 is connected and extends within the second housing 150. The second housing 150 may include a ledge 153 at a top end thereof that has a diameter greater than an outer diameter of the body 152. Similar to the first housing, the second housing 150 may be established such that a top to bottom cross-section of the second housing 150 (that extends through the longitudinal axis 2 of the second housing) is the same around the entire circumference of the second housing 150, other than the inner threads within the 155 through the second housing. The second housing 150 includes top and bottom holes and an inner cavity/lumen that extends therethrough, which may be threaded. The body 124 of the first housing 120 through the top hole and threadably engages the second housing to fix the two components to each other.

In some embodiments, the ledge 153 of the second housing includes a horizontal surface 153a and an upstanding surface 153b that is disposed at the edge portion of the ledge 153. As best understood with reference to FIG. 5, when the first housing 120 is connected to the second housing 150, the upstanding surface 153b of the second housing is aligned with the downwardly extending circumferential portion 126b, which receives a portion of the grommet 140 therebetween. As shown in FIG. 5, a void is formed inboard of the alignment between the upstanding surface 153b and the downwardly extending circumferential portion 126b that receives an inner circular surface of the grommet 140 therein, which has a height that is greater than a space between the upstanding surface 153b and the downwardly extending circumferential portion 126b to securely retain the grommet 140 with respect to the first and second housings 120, 150.

An end cap 170 may be provided, which has a ledge portion 172 and a body portion 174, with the ledge portion 172 having a larger outer diameter than the body portion 174. The end cap may have a cavity that extends through the end cap, through which the wire 109 (when provided) extends (which also extends through the cavity in the second housing 150. The body portion 174 may be threaded and the body portion may extend within a hole at the bottom of the second housing and threadably connect with the second housing 150 such that the ledge portion 172 contacts the bottom end of the second housing 150 when assembled. In some embodiments, the outer diameter of the ledge portion 172 of the end cap 170 may be larger than the outer diameter of the body 154 of the second housing, such that an inner flange of the support disk 160 rests upon the ledge portion 172 when the temperature detector is assembled as shown in FIG. 5.

As shown in FIG. 8, the first housing 120, the grommet 140, the second housing 150, and the end cap 170 may be aligned along the same longitudinal axis 2 and may be connectable to each other via the threaded connections discussed above, with the grommet 140 disposed between the ledges of the first and second housing, and in some embodiments with the portion of the grommet 140 extending between the ledges being locally compressed by the first and second housings 120, 140.

The support disk 160 is best shown in FIGs. 5, 6a, 7a, 9, and 9a. The support disk 160 includes a center portion 162 with an aperture therethrough (through which the second housing 150 extends), and an outer support portion 168.

The outer support portion 168 defines the outer portion of the support disk and is flat and when assembled rests upon the outer resting surface 188 of the support 180.

The center portion 162 includes an outer cylindrical portion 163 that extends upwardly from the outer resting portion 168 and an inverse conical portion 164 that extends downwardly toward a central aperture. The inverse conical portion includes an upper facing surface that has a straight cross-section (FIG. 5), and is projected about its central longitudinal axis (2) a full 360 degrees, to establish the inverse of a cone around center portion 162. In other embodiments, the center portion 162 may define a curved surface (along the entire surface or a portion of the surface) that extends downwardly toward the central aperture which may also extend a full 360 degrees around the central longitudinal axis (2).

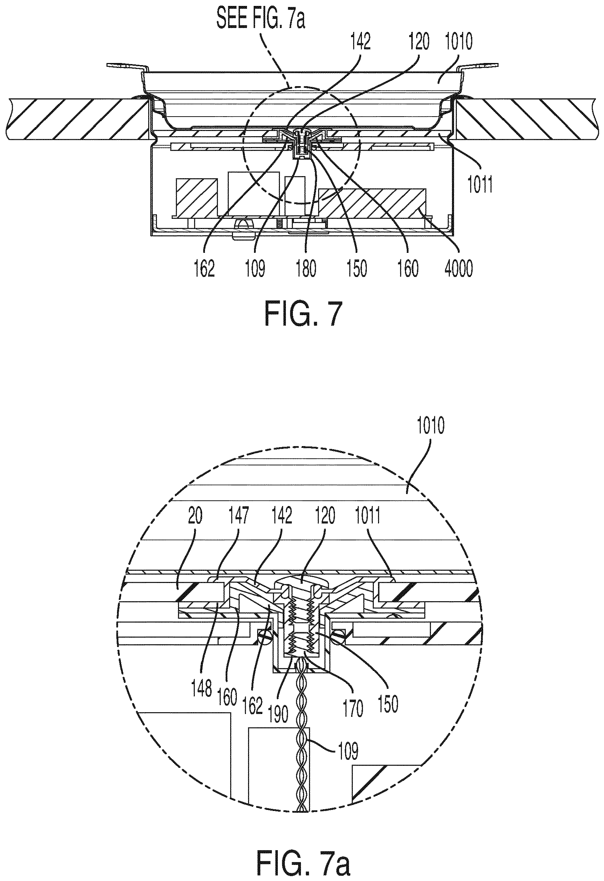

In some embodiments, the top surface 165 of the center portion is disposed at a similar (or the same) height as the top surface 20a of the resting surface 20, which allows the arcuate portion 142 of the grommet 140 to be compressed such the grommet does not extend above the ledge 147 of the grommet when the grommet 140 and first housing 120 are urged downwardly by a pan resting thereon (FIG. 7a).

In some embodiments, the center portion 162 forms a central aperture, that is defined by an inner flange 166 that extends within the pocket 182 of the support 180 and in some embodiments contacts the end cap 170. As shown in FIG. 5, the second housing extends within the inner flange 166 of the center portion, which supports the second housing 150.

The grommet 140 is best shown in FIGs. 5, 6a, 7a, and 8. The grommet may be made from an elastomeric material, such as rubber or elastomeric polymers. The grommet 140 includes an arcuate portion 142 that defines a central opening, a cantilevered portion 147, and a ledge 147. The ledge 148 extends generally parallel to the cantilevered portion 147, with a space disposed therebetween. As shown in FIG. 5, the resting surface 20 extends within the space, such that the cantilevered portion 147 rests upon the top surface 20a of the resting surface 20 and the bottom surface 20b rests upon the ledge 148.

The arcuate portion 142 is biased upwardly by the spring 190 (via the second housing 150) such that it normally extends to an elevation above the top surface 20a of the resting portion 20. In some embodiments, the curvature of the grommet 140 may also contribute to the upward biasing force upon the first housing 120. The arcuate portion 142 extends from the ledge 147 in a cantilevered manner toward the center aperture. As discussed above a portion of the arcuate portion 142 of the grommet 140 is disposed between the upstanding surface 153b of the second housing 150 and the downwardly extending circumferential portion 126b of the first housing 120, such that a downward force applied to the first housing 120 (by the pan being disposed thereon) causes the grommet 140 to be urged downwardly, which elastically deforms the grommet such that its arcuate portion 142 extends below the ledge 147 is the first housing 120 is forced downward. Downward motion of the first housing 120 similar causes downward motion of the second housing 150 (and the end cap 170 when provided) against the biasing force of the spring 190. As the arcuate portion is deformed it approaches and may contact the center portion 162 of the support disk 160.

Turning now to FIGs. 6-7a, the operation of the temperature detector 100 is best understood. As shown in FIGs. 6 and 6a, the arcuate portion 142 of the 140 and the first housing 120 normally extend above the top surface 20a of the resting surface 20 and above the ledge 147 of the grommet 140. As shown in FIGs. 7 and 7a, when a pan 1010 is positioned upon the first housing 120 and grommet 140 are pushed downward by the force/weight of the pan 1010, which ensures that the top surface 122 of the first housing 120 makes good contact with the bottom surface of the pan 1010, which ensures that the RTD receives a heat flux through the top surface 122 that is representative of the heat of the pan 1010. When the pan 1010 is removed, the biasing force of the spring 190 urges the first housing 120 and the grommet 140 (and the second housing 150, which is fixed to the first housing 120) upward to return to the orientation of FIGs. 6 and 6a.

While the preferred embodiments of the disclosed have been described, it should be understood that the invention is not so limited and modifications may be made without departing from the disclosure. The scope of the disclosure is defined by the appended claims, and all devices that come within the meaning of the claims, either literally or by equivalence, are intended to be embraced therein.

Described herein is a temperature detector configured to be disposed in an aperture in a resting surface of an induction heating system. The temperature detector comprises an RTD and associated wiring, a first housing that receives the RTD, and a grommet disposed around the first housing. The grommet includes an arcuate portion. The arcuate portion may be arranged to engage with the resting surface when, in use, the temperature detector is disposed in the aperture in the resting surface. The arcuate portion may surround the temperature detector to provide an outwardly extending flange, which may be annular, for example circularly annular.

This grommet may be configured to allow movement of the temperature detector upward and/or downward relative to the resting surface, for example resilient movement. This may allow the temperature detector to be depressed into the resting surface, for example by a pan being positioned on the resting surface for heating. When it is depressed in this way, the arcuate portion may be biased in a direction upwardly from the resting surface. This temperature detector further comprises a cylindrical second housing that supports and receives a portion of the first housing therewith and through a first end of the second housing, comprises a central opening through which the first housing extends, wherein the central opening defines a inner circular surface that is disposed between the first and second housings.

## Claims

1. A system comprising a temperature detector (100) and an induction heating system, the induction heating system comprising a resting surface (20) wherein a pan (1010) is to be disposed for heating by the induction heating system on the resting surface (20), for example wherein the temperature detector (100) is disposed upon the resting surface (20) such that the pan disposed for heating on the resting surface (20) contacts the temperature detector (100), for example wherein the induction heating system comprises an induction coil (3000),
the temperature detector (100) is configured to be disposed in an aperture in the resting surface of the induction heating system, the temperature detector comprising:
an RTD (129) and associated wiring (109), a first housing (120) that receives the RTD (129), and a grommet (140) disposed around the first housing (120),
the temperature detector (100) further comprises a cylindrical second housing (150) that supports and receives a portion of the first housing (120) therewith and through a first end of the second housing (150),
wherein the grommet (140) includes an arcuate portion (142) arranged such that when, in use, the temperature detector (100) is disposed in the aperture in the resting surface (20) the arcuate portion (142) engages with the resting surface (20), wherein the arcuate portion (142) is biased in a direction upwardly from the resting surface (20), the arcuate portion (142) comprises a central opening through which the first housing (120) extends, wherein the central opening defines a inner circular surface that is disposed between the first and second housings (120, 150),
the grommet (140) further comprises a ledge (148) and a cantilevered portion (147) wherein the arcuate portion (142) extends from the cantilevered portion (147), and the arcuate portion (142) defines the central opening, wherein the ledge (148) extends generally parallel to the cantilevered portion (147) with a space disposed therebetween, wherein the resting surface extends within the space such that the cantilevered portion (147) rests upon a top surface (20a) of the resting surface 20 and the bottom surface (20b) rests upon the ledge (148).

2. The system of claim 1, further comprising an end cap (170) that extends into the second housing (150) through a second end of the second housing (150), wherein the end cap (170) contacts the inner surface of the second housing (150).

3. The system of claim 2, wherein the inner surface of the second housing (150) is threaded along at least a portion of its length, and wherein the first housing (120) and the second housing (150) make a threaded connection, and wherein the end cap (170) makes a threaded connection with the second housing (150).

4. The system of any one of the preceding claims wherein the associated wiring (109) from the RTD (129) extends through the first housing (120), the central opening in the grommet (140), and the second housing (150).

5. The system of any preceding claim, wherein the grommet (140) is circular and the ledge (148), cantilevered portion (147), and the arcuate portion (142) each extend around the circumference of the circular grommet (140).

6. The system of any preceding claim further comprising a support disk (160) that is disposed below the ledge (148), the support disk (160) includes a center portion with an aperture though which the second housing (150) extends, the center portion of the support disk (160) has an inverse conical portion (164) with a side wall that extends downwardly toward the aperture, wherein the inverse conical portion (164) is disposed below the arcuate portion (142) of the grommet (140).

7. The system of claim 6, wherein the first housing (120) is aluminium and/or the grommet (140) is an elastomeric material.

8. The system of any preceding claim, wherein the resting surface (20) is circular and includes a center aperture through which the temperature detector (100) extends, further comprising a side wall that contacts an outer circumferential sidewall of the resting surface (20) and extends above a top surface of the resting surface (20).

9. The system of any preceding claim, wherein the temperature detector (100) comprises a plurality of temperature detectors (100), wherein the resting surface (20) is rectangular and includes a plurality of spaced apertures and each of the plurality of temperature detectors (100) extends through a respective corresponding one of the plurality of spaced apertures, the temperature detector (100) optionally further comprising a side wall that contacts and outer surface of the resting surface (20) and extends above a top surface of the resting surface (20).

10. The system of any preceding claim wherein the grommet (140) further comprises a ledge (148) and a cantilevered portion (147), wherein the arcuate portion (142) extends from the cantilevered portion (147), the arcuate portion (142) defines the central opening, and wherein a portion of the resting surface (20) is disposed between the cantilevered portion (147) and the ledge (148).

11. The system of claim 10 wherein the arcuate portion (142) of the grommet (140) is configured so that when the grommet (140) is urged downwardly the first housing (120) and the second housing (150) are also urged downwardly, for example when a pan (1010) is positioned upon the first housing (120).

12. The system of claim 11 wherein the temperature detector (100) comprises a support disk (160) that is disposed below the ledge (148), the support disk (160) includes a center portion with an aperture though which the second housing (150) extends, the center portion an inverse conical portion (164) with a side wall that extends downwardly toward the aperture, wherein the inverse conical portion (164) is disposed below the arcuate portion (142) of the grommet (140) wherein the arcuate portion (142) of the grommet (140) contacts the center portion of the support disk (160) when urged downwardly when the pan is positioned upon the first housing (120).

13. The system of claim 11, wherein the second housing (150) and first housing (120) are urged upwardly by a spring (190) disposed below the second housing (150) and wherein the first and second housings (150) are urged downwardly against the upward urging force of the spring (190) when a pan (1010) is disposed upon the first housing (120).

## Patentansprüche

1. Ein System, das einen Temperaturdetektor (100) und ein Induktionsheizsystem umfasst, wobei das Induktionsheizsystem eine Auflagefläche (20) umfasst, wobei ein Topf (1010) zum Erhitzen durch das Induktionsheizsystem auf der Auflagefläche (20) angeordnet wird, wobei zum Beispiel der Temperaturdetektor (100) auf der Auflagefläche (20) so angeordnet ist, dass der zum Erhitzen auf der Auflagefläche (20) angeordnete Topf den Temperaturdetektor (100) berührt, wobei zum Beispiel das Induktionsheizsystem eine Induktionsspule (3000) umfasst,
wobei der Temperaturdetektor (100) dazu konfiguriert ist, in einer Aussparung in der Auflagefläche des Induktionsheizsystems angeordnet zu werden, wobei der Temperaturdetektor Folgendes umfasst:
einen RTD (129) und assoziierte Verkabelung (109), ein erstes Gehäuse (120), das den RTD (129) aufnimmt, und eine Tülle (140), die um das erste Gehäuse (120) herum angeordnet ist,
wobei der Temperaturdetektor (100) ferner ein zylindrisches zweites Gehäuse (150) umfasst, das einen Abschnitt des ersten Gehäuses (120) damit stützt und durch ein erstes Ende des zweiten Gehäuses (150) aufnimmt,
wobei die Tülle (140) einen gebogenen Abschnitt (142) beinhaltet, der so eingerichtet ist, dass, wenn bei Verwendung der Temperaturdetektor (100) in der Aussparung in der Auflagefläche (20) angeordnet ist, der gebogene Abschnitt (142) die Auflagefläche (20) in Eingriff nimmt, wobei der gebogene Abschnitt (142) in einer Richtung aufwärts von der Auflagefläche (20) vorgespannt ist, wobei der gebogene Abschnitt (142) eine mittige Öffnung umfasst, durch die sich das erste Gehäuse (120) erstreckt, wobei die mittige Öffnung eine innere kreisförmige Fläche definiert, die zwischen dem ersten und zweiten Gehäuse (120, 150) angeordnet ist,
wobei die Tülle (140) ferner eine Kante (148) und einen auskragenden Abschnitt (147) umfasst, wobei sich der gebogene Abschnitt (142) von dem auskragenden Abschnitt (147) erstreckt und der gebogene Abschnitt (142) die mittige Öffnung definiert, wobei sich die Kante (148) generell parallel zu dem auskragenden Abschnitt (147) mit einem dazwischen angeordneten Raum erstreckt, wobei sich die Auflagefläche innerhalb des Raums so erstreckt, dass der auskragende Abschnitt (147) auf einer oberen Fläche (20a) der Auflagefläche (20) aufliegt und die untere Fläche (20b) auf der Kante (148) aufliegt.

2. System nach Anspruch 1, das ferner eine Endkappe (170) umfasst, die sich in das zweite Gehäuse (150) durch ein zweites Ende des zweiten Gehäuses (150) erstreckt, wobei die Endkappe (170) die innere Fläche des zweiten Gehäuses (150) berührt.

3. System nach Anspruch 2, wobei die innere Fläche des zweiten Gehäuses (150) entlang mindestens eines Abschnitts seiner Länge mit einem Gewinde versehen ist, und wobei das erste Gehäuse (120) und das zweite Gehäuse (150) eine Gewindeverbindung herstellen, und wobei die Endkappe (170) eine Gewindeverbindung mit dem zweiten Gehäuse (150) herstellt.

4. System nach einem der vorhergehenden Ansprüche, wobei sich die assoziierte Verkabelung (109) von dem RTD (129) durch das erste Gehäuse (120), die mittige Öffnung in der Tülle (140) und das zweite Gehäuse (150) erstreckt.

5. System nach einem vorhergehenden Anspruch, wobei die Tülle (140) kreisförmig ist und sich die Kante (148), der auskragende Abschnitt (147) und der gebogene Abschnitt (142) jeweils um den Umfang der kreisförmigen Tülle (140) herum erstrecken.

6. System nach einem vorhergehenden Anspruch, das ferner eine Stützscheibe (160) umfasst, die unter der Kante (148) angeordnet ist, wobei die Stützscheibe (160) einen mittleren Abschnitt mit einer Aussparung beinhaltet, durch die sich das zweite Gehäuse (150) erstreckt, wobei der mittlere Abschnitt der Stützscheibe (160) einen umgekehrt kegelförmigen Abschnitt (164) mit einer seitlichen Wand, die sich abwärts zu der Aussparung hin erstreckt, aufweist, wobei der umgekehrt kegelförmige Abschnitt (164) unter dem gebogenen Abschnitt (142) der Tülle (140) angeordnet ist.

7. System nach Anspruch 6, wobei das erste Gehäuse (120) Aluminium ist und/oder die Tülle (140) ein elastomeres Material ist.

8. System nach einem vorhergehenden Anspruch, wobei die Auflagefläche (20) kreisförmig ist und eine mittlere Aussparung beinhaltet, durch die sich der Temperaturdetektor (100) erstreckt, der ferner eine seitliche Wand umfasst, die eine äußere umfängliche Seitenwand der Auflagefläche (20) berührt und sich über einer oberen Fläche der Auflagefläche (20) erstreckt.

9. System nach einem vorhergehenden Anspruch, wobei der Temperaturdetektor (100) eine Vielzahl von Temperaturdetektoren (100) umfasst, wobei die Auflagefläche (20) rechtwinklig ist und eine Vielzahl von beabstandeten Aussparungen beinhaltet und sich jeder der Vielzahl von Temperaturdetektoren (100) durch eine jeweilige entsprechende der Vielzahl von beabstandeten Aussparungen erstreckt, wobei der Temperaturdetektor (100) optional ferner eine seitliche Wand umfasst, die eine äußere Fläche der Auflagefläche (20) berührt und sich über einer oberen Fläche der Auflagefläche (20) erstreckt.

10. System nach einem vorhergehenden Anspruch, wobei die Tülle (140) ferner eine Kante (148) und einen auskragenden Abschnitt (147) umfasst, wobei sich der gebogene Abschnitt (142) von dem auskragenden Abschnitt (147) erstreckt, der gebogene Abschnitt (142) die mittige Öffnung definiert, und wobei ein Abschnitt der Auflagefläche (20) zwischen dem auskragenden Abschnitt (147) und der Kante (148) angeordnet ist.

11. System nach Anspruch 10, wobei der gebogene Abschnitt (142) der Tülle (140) so konfiguriert ist, dass, wenn die Tülle (140) abwärts gedrückt wird, das erste Gehäuse (120) und das zweite Gehäuse (150) ebenfalls abwärts gedrückt werden, zum Beispiel wenn ein Topf (1010) auf dem ersten Gehäuse (120) positioniert ist.

12. System nach Anspruch 11, wobei der Temperaturdetektor (100) eine Stützscheibe (160) umfasst, die unter der Kante (148) angeordnet ist, wobei die Stützscheibe (160) einen mittleren Abschnitt mit einer Aussparung beinhaltet, durch die sich das zweite Gehäuse (150) erstreckt, der mittlere Abschnitt ein umgekehrt kegelförmiger Abschnitt (164) mit einer seitlichen Wand, die sich abwärts zu der Aussparung hin erstreckt, wobei der umgekehrt kegelförmige Abschnitt (164) unter dem gebogenen Abschnitt (142) der Tülle (140) angeordnet ist, wobei der gebogene Abschnitt (142) der Tülle (140) den mittleren Abschnitt der Stützscheibe (160) berührt, wenn sie abwärts gedrückt wird, wenn der Topf auf dem ersten Gehäuse (120) positioniert ist.

13. System nach Anspruch 11, wobei das zweite Gehäuse (150) und das erste Gehäuse (120) durch eine Feder (190), die unter dem zweiten Gehäuse (150) angeordnet ist, aufwärts gedrückt werden, und wobei das erste und zweite Gehäuse (150) gegen die aufwärts drückende Kraft der Feder (190) abwärts gedrückt werden, wenn ein Topf (1010) auf dem ersten Gehäuse (120) angeordnet ist.

## Revendications

1. Système comprenant un détecteur de température (100) et un système de chauffage par induction, le système de chauffage par induction comprenant une surface de repos (20) sur laquelle une poêle (1010) doit être disposée pour être chauffée par le système de chauffage par induction sur la surface de repos (20), par exemple le détecteur de température (100) étant disposé sur la surface de repos (20) de telle sorte que la poêle disposée pour être chauffée sur la surface de repos (20) entre en contact avec le détecteur de température (100), par exemple le système de chauffage par induction comprenant une bobine d'induction (3000),
le détecteur de température (100) étant configuré pour être disposé dans une ouverture de la surface de repos du système de chauffage par induction, le détecteur de température comprenant :
un RTD (129) et un câblage associé (109), un premier logement (120) qui reçoit le RTD (129), et une rondelle (140) disposée autour du premier logement (120),
le détecteur de température (100) comprenant en outre un second logement cylindrique (150) qui supporte et reçoit une partie du premier logement (120) avec celui-ci et à travers une première extrémité du second logement (150),
la rondelle (140) comprenant une partie arquée (142) conçue de telle sorte que, lors de l'utilisation, lorsque le détecteur de température (100) est disposé dans l'ouverture de la surface de repos (20), la partie arquée (142) entre en contact avec la surface de repos (20), la partie arquée (142) étant sollicitée dans une direction verticale par rapport à la surface de repos (20), la partie arquée (142) comprenant une ouverture centrale par laquelle s'étend le premier logement (120), l'ouverture centrale définissant une surface circulaire intérieure qui est disposée entre les premier et second logements (120, 150),
la rondelle (140) comprenant en outre un rebord (148) et une partie en porte-à-faux (147), la partie arquée (142) s'étendant à partir de la partie en porte-à-faux (147) et la partie arquée (142) définissant l'ouverture centrale, le rebord (148) s'étendant généralement parallèlement à la partie en porte-à-faux (147) avec un espace disposé entre eux, la surface de repos s'étendant dans l'espace de telle sorte que la partie en porte-à-faux (147) repose sur une surface supérieure (20a) de la surface de repos (20) et que la surface inférieure (20b) repose sur le rebord (148).

2. Système selon la revendication 1, comprenant en outre un capuchon d'extrémité (170) qui s'étend dans le second logement (150) jusqu'à une seconde extrémité du second logement (150), le capuchon d'extrémité (170) étant en contact avec la surface intérieure du second logement (150).

3. Système selon la revendication 2, dans lequel la surface intérieure du second logement (150) est filetée sur au moins une partie de sa longueur, le premier logement (120) et le second logement (150) établissant une liaison filetée, et le capuchon d'extrémité (170) établissant une liaison filetée avec le second logement (150).

4. Système selon l'une quelconque des revendications précédentes, dans lequel le câblage associé (109) du RTD (129) s'étend dans le premier logement (120), par l'ouverture centrale de la rondelle (140) et dans le second logement (150).

5. Système selon l'une quelconque des revendications précédentes, dans lequel la rondelle (140) est circulaire et le rebord (148), la partie en porte-à-faux (147) et la partie arquée (142) s'étendent chacun autour de la circonférence de la rondelle circulaire (140).

6. Système selon l'une quelconque des revendications précédentes, comprenant en outre un disque de support (160) qui est disposé sous le rebord (148), le disque de support (160) comprenant une partie centrale avec une ouverture par laquelle le second logement (150) s'étend, la partie centrale du disque de support (160) ayant une partie conique inversée (164) avec une paroi latérale qui s'étend vers le bas vers l'ouverture, la partie conique inversée (164) étant disposée sous la partie arquée (142) de la rondelle (140).

7. Système selon la revendication 6, dans lequel le premier logement (120) est en aluminium et/ou la rondelle (140) est en matériau élastomère.

8. Système selon l'une quelconque des revendications précédentes, dans lequel la surface de repos (20) est circulaire et comprend une ouverture centrale par laquelle le détecteur de température (100) s'étend, le système comprenant en outre une paroi latérale qui entre en contact avec une paroi latérale circonférentielle extérieure de la surface de repos (20) et qui s'étend au-dessus d'une surface supérieure de la surface de repos (20).

9. Système selon l'une quelconque des revendications précédentes, dans lequel le détecteur de température (100) comprend une pluralité de détecteurs de température (100), la surface de repos (20) étant rectangulaire et comprenant une pluralité d'ouvertures espacées, et chaque détecteur de température de la pluralité de détecteurs de température (100) s'étendant par une ouverture correspondante respective de la pluralité d'ouvertures espacées, éventuellement le détecteur de température (100) comprenant en outre une paroi latérale qui entre en contact avec une surface extérieure de la surface de repos (20) et qui s'étend au-dessus d'une surface supérieure de la surface de repos (20).

10. Système selon l'une quelconque des revendications précédentes, dans lequel la rondelle (140) comprend en outre un rebord (148) et une partie en porte-à-faux (147), la partie arquée (142) s'étendant à partir de la partie en porte-à-faux (147), la partie arquée (142) définissant l'ouverture centrale, et une partie de la surface de repos (20) étant disposée entre la partie en porte-à-faux (147) et le rebord (148).

11. Système selon la revendication 10, dans lequel la partie arquée (142) de la rondelle (140) est configurée de telle sorte que, lorsque la rondelle (140) est poussée vers le bas, le premier logement (120) et le second logement (150) soient également poussés vers le bas, par exemple lorsqu'une poêle (1010) est positionnée sur le premier logement (120).

12. Système selon la revendication 11, dans lequel le détecteur de température (100) comprend un disque de support (160) qui est disposé sous le rebord (148), le disque de support (160) comprenant une partie centrale avec une ouverture par laquelle le second logement (150) s'étend, la partie centrale ayant une partie conique inversée (164) avec une paroi latérale qui s'étend vers le bas vers l'ouverture, la partie conique inversée (164) étant disposée sous la partie arquée (142) de la rondelle (140), la partie arquée (142) de la rondelle (140) entrant en contact avec la partie centrale du disque de support (160) lorsqu'elle est poussée vers le bas lorsque la poêle est positionnée sur le premier logement (120).

13. Système selon la revendication 11, dans lequel le second logement (150) et le premier logement (120) sont poussés vers le haut par un ressort (190) disposé sous le second logement (150), les premier et second logements (150) étant poussés vers le bas contre la force de poussée vers le haut du ressort (190) lorsqu'une poêle (1010) est disposée sur le premier logement (120).
